# EUROPEAN PATENT APPLICATION

(11) **EP 1 117 025 A2**
(43) Date of publication of application: **18.07.2001**
(21) Application number: 00204608.4
(22) Date of filing: 18.12.2000
(51) Int. Cl.: G06F 1/00

(54) **Method and system for membership validation**

(30) Priority: 18.12.1999 US 465261
(71) Applicant: StudentUniverse.com, Delaware, Massachusetts 02141 (US)
(72) Inventor: Stormer, Fredrik Carl, Brookline, MA 02446 (US); Odegaard, Espen, Brookline, MA 02446 (US); Lanfanco, Sam, Fresno, CA 93722 (US); Christiansen, Tore Reidar, Bekkestua 1340 (NO); Steidley, Adam, Las Vegas, NV 89113 (US); Wevodau, Bruce, New Castle, De 19720 (US)
(74) Representative: Siniscalco, Fabio

(57) **Abstract**

A method and a system that allows verification of affiliation with any one or more of a set of affinity groups provides information about the conditions under which a benefit can inure to a supplicant who is found to be a member in good standing with a given group, or collection of groups. The system comprises a communication module that interacts with a party accessing the system and a processor that is coupled to information stores. The communication module is coupled to a processor that is also coupled to an information store. The information store is at least partly within the system. In some embodiments, parts of the information store are remote to the system. A party that is in the business of providing benefits connects to the system, identifies a supplicant, and specifies one or more affiliation groups. The processor searches the information store, determines whether the supplicant is a bona fide member of one of more of the specified groups, and is provided with information regarding the terms and conditions under which the supplicant might receive benefits from the party.

## Description

### Background of the Invention:

This invention relates to interrelationships and interactions between affinity groups, providers of goods and services, and entities that are affiliated with the affinity groups. More particularly, this relates to a computer system and method for carrying out such interactions.

Every person is affiliated with one group or another. While many of the affiliations are inherent, or almost inherent, such as the affiliation to a particular nationality, others are voluntarily subscribed to. Moreover, many of the affiliations grant their members various privileges or benefits.

In the commercial arena, perhaps the most well known affiliation is belonging to a group of authorized credit card holders, such as VISA , Master Card, American Express, Sears, etc. Membership in those groups entitles one to receive goods and services in exchange for merely asserting membership in the group, coupled with a small amount of information that allows verification of the assertion.

Such verification is effected by contacting a verification system of the asserted affinity group, providing the system with the information given by the person asserting that affiliation, and obtaining a confirmation that the individual asserting the affiliation is a *bona fide* member. This confirmation serves as an authorization to treat the individual in accordance with the rights and privileges that attend affiliation with the group.

The problem with this arrangement is that it is fairly rigid, mostly because it handles the verification of affiliation vis-à-vis a single affinity group.

### Summary of the Invention

Deficiencies with the prior art are, overcome, and an advance in the art is achieved with a system that constructs and maintains information about relationships between affinity groups, providers, and entities such as individuals, and this information allows for a variety of interactions. This includes verification of affiliation with any of a set of affinity groups, and provides information about the conditions under which a benefit can inure to a supplicant who is verified to be a member in good standing with a given group, or collection of groups. The system comprises a communication module that interacts with a party accessing the system and a processor that is coupled to information stores. The communication module is coupled to a processor that is also coupled to an information store. The information store is at least partly within the system. In some embodiments, parts of the information store are remote to the system.

Operationally, a party that is in the business of providing benefits connects to the system, identifies a supplicant, and specifies one or more affiliation groups. The processor searches the information store, determines whether the supplicant is a bona fide member of one of more of the specified groups, and is provided with information regarding the terms and conditions under which the supplicant might receive benefits from the party. Optionally, the system then develops information that informs the group/groups that was/were instrumental in the supplicant receiving the sought benefit that a benefit was granted to the supplicant.

### Brief Description of the Drawing

FIG. 1 presents a block diagram of a system in accord with the principles disclosed herein;
FIG. 2 presents one relational database structure for the information store of in the FIG. 1 system;
FIG. 3 illustrates a dialog box that is initially presented to a caller;
FIG. 4 illustrates a dialog box that is presented to a prospective member;
FIG. 5 illustrates a dialog box that is presented to a group;
FIG. 6 illustrates a dialog box that allows a group to add or delete from its set of affiliated members;
FIG. 7 illustrates a dialog box that is presented to a provider of goods and services (benefits);
FIG. 8 illustrates a dialog box that is presented to a provider, to allow the provider to grant his goods and services to different affinity groups under conditions that are specified by the provider;
FIG. 9 illustrates a dialog box that is presented to a benefits supplicant;
FIG. 10 presents another relational database structure in conformance with the principles disclosed herein; and
FIG. 11 presents yet another relational database in conformance with the principles disclosed herein.

### Detailed Description

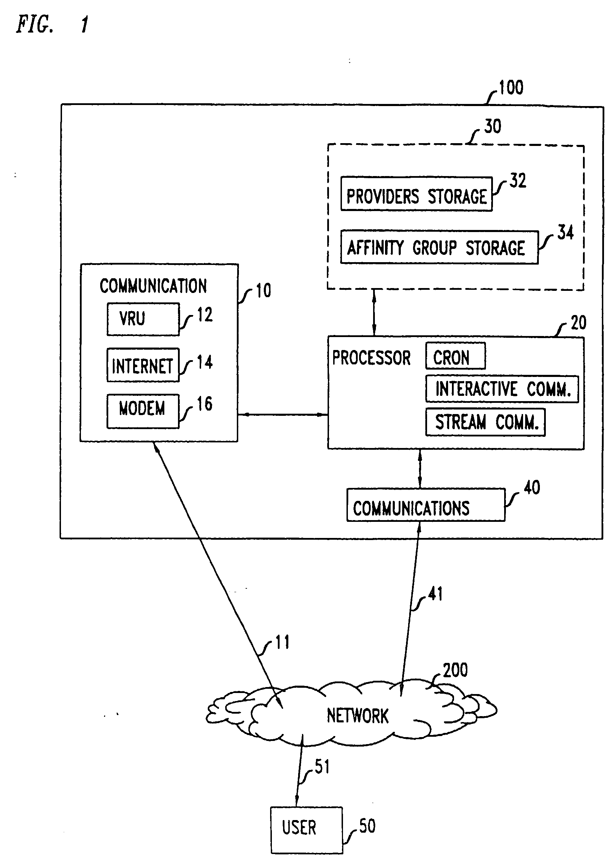

FIG. 1 presents a general block diagram of an illustrative arrangement that embodies the principles disclosed herein. It shows a user 50 that is connected to a network 200, and through network 200 the user is connected to system 100. System 100 includes a block 10 is a communication module that provides a query interface for system 100 with network 200. Illustratively, this module includes a conventional modem-bank module 16 that allows digital communication to the FIG. 1 system, an Internet module 14 that provides a web site interface to the World Wide Web, and a voice response unit 12 that permits interactions via conventional voice communication. These varied paths of communication, which employ the services of a telecommunications provider, are shown to be coalesced in bus 11 of FIG. 1. It may be noted that the communication paths (i.e., bus 11) can wired, wireless, or a combination of both.

The interactions of communication module 10 with parties connected to system 100 via bus 11 are guided by processor 20, which is coupled to communication module 10 and to information store 30. Information store 30 comprises at least a providers store 32 and, optionally, additional stores such as affinity groups store 34. Processor 20 is also connected to communication module 40, through which processor 20 can obtain information that is necessary for the interaction with users 50 that access system 100 via bus 11. Communication module 40, which is coupled to communication path 41, is shown to be distinct from communication module 10 and bus 11. Skilled artisans would realize, however, that communication module 10 and bus 11 can serve the functions of communication module 40 and path 41. As will be appreciated from a discussion of module 40 below, it is advantageous to include means (when module 40 is subsumed by module 10) for maintaining the communication function of module 10 while carrying out the communication function of module 40, and vice versa.

It is an object of the FIG. 1 system to create an arrangement that supports sophisticated relationships between entities who seek to receive benefits (supplicants), providers, and groups (affinity groups) that have agreements with providers of benefits to grant those benefits to their members. Those relationships include, for example, the ability to create groups, the ability to add providers, the ability to control who can gain read-access to which information and who can gain write-access to which information, etc. Those relationships include the circumstance under which such read-access and writ-access is provided. To that end, a database is maintained by the FIG. 1 system that is effectively a relational database.

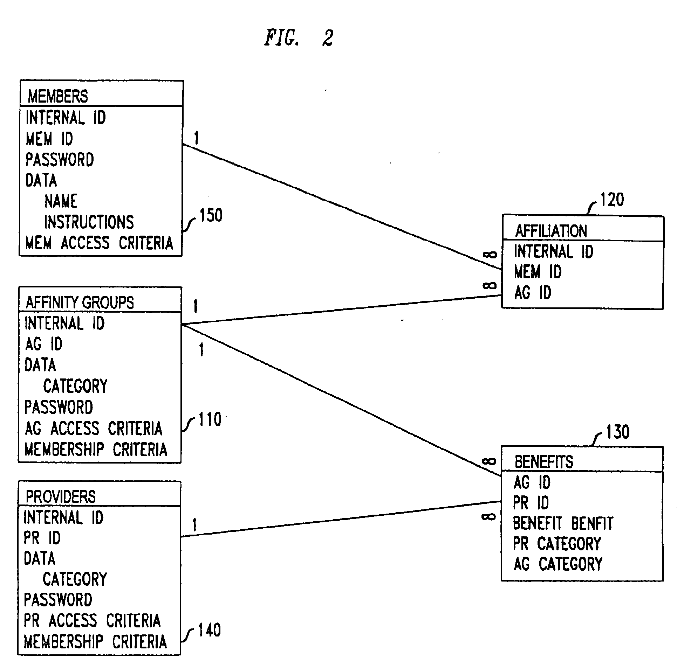

FIG. 2 presents one illustrative embodiment of a relational database that is contained in store 30. It includes a member table 150, a groups table 110, an affiliations table 120, a benefits table 130, and a providers table 140.

Members table 150 contains information about entities, typically individuals, who are affiliated with one or more affinity groups. Illustratively, table 150 contains an internal ID field, a member ID field, numerous data fields that contain information about the member (such as the member's name, member's instructions, etc.), a member password field, and a member Access Criteria field. Some of this information may be sensitive, private, information to which users who provide this information do not wish others to have unrestricted access.

The internal ID field (in table 150 and in all other tables that have them) is basically a system-generated number that the member is not aware of. It is unique for each record in table 150 and, it is also unique to each member. It may be used for establishing relationships among the FIG. 2 tables. The member ID field is also unique to each member, but the member knows the value of this field. This field allows a member to point to his unique record in table 100. (This field is necessary because names are not unique.)

The contents of table 150 and, consequently, the information in each member's record are subject to the control of processor 20. The password field of table 150 is employed by processor 20 to control (at least) the write-access to table 150. Specifically, in accordance with the principles embodied in the system reflected by the FIG. 2 database, a caller that gains access to system 100 is still unable to modify any record in table 150, unless the caller can provide the proper password that is associated with the record to be modified. Conversely the caller that provides the proper password is permitted to modify entries in the one record of table 150 that is associated with that password. It is presumed that no one other than the member has that password. Needless to say, the administrator of the FIG. 1 system can modify the contents of table 150 and, hence, can modify any record therein. This includes the password field itself, but it is assumed that the administrator is a trusted party. Of course, there is no reason why the data may not be encrypted so that even the administrator is not privy to the information that is maintained on the system.

The access criteria field provides a mechanism for controlling read-access to information in the record. This field controls a robust access control process within processor 20. Specifically, the information in this field allows the owner of the record (i.e. the entity in possession of the password) to specify who can read which fields of the record, and under what circumstances that permission is granted. The access criteria field can, effectively, embody an entire decision tree, or decision program. To give a fairly simply example, the field can contain the following:
*Grant read permission to the name and address fields if*
*{*
*you are representative of group A, or*
*you are in possession of code x, or*
*you are a provider of health services*
*}.*

Table 110 is the affinity groups table. As in connection with members table 150, table 110 includes an internal ID field, and a group ID field. It may be noted that by insuring that no two groups employ the same name, one may drop the internal ID field, because the group's ID can be used to uniquely identify the affinity group. Also as with table 150, table 110 includes other fields (Data fields, such as a group category field) that are deemed necessary or merely useful by the designer of system 100. In addition, table 100 includes a password field, and an access criteria field. The functions of the password and the access criteria field are as described above.

The access criteria field can be used to control write-access to tables. Alternatively, the write-access can be controlled with a separate field, such as the membership criteria field that table 110 has. This field, like the access criteria field, can comprise a set of criteria, in practically whatever level of sophistication desired. The criteria effectively decide whether an entity that is identified in members table 150 can be affiliated with an affinity group that is identified in groups table 110. Stated in other words, satisfying the criteria set forth in the membership criteria field of table 100 and the membership criteria information of table 150 is a necessary requirement for inserting and maintaining a record in affiliations table 120, which is described below. Illustratively, a membership criterion may be "the applicant is acceptable if the name of the applicant is found in the affiliation table as belonging to the group *Columbia University Student* and, also belongs to the subgroup of *Graduate Students,"* or "an applicant is acceptable if two members of the group have been recommended the applicant for membership,." The instruction field within table 150 may be the place to query to determine whether a recommendation has been made. Table 150 can impose the very same type of criteria on affiliations, and as suggested above, that information can be imparted with a membership criteria field, embodied in the access criteria field, or in still other fields.

Table 120 is the affiliations table that maintains the relationship between entries in the members table and entries in the groups table. In addition to an internal ID field, it includes a group affiliation field that is associated with the group name field of table 110, and a member ID field that is associated with the member ID field of table 100. As shown in FIG. 2, both relationships are of the 1 to many (1 : ∞) variety. That is, there may be many records in table 120 that are associated with a particular record in table 110, and similarly, there may be many records in table 120 that are associated with a particular record in table 100.

As indicated above, in accordance with the principles of the FIG. 2 embodiment, maintaining an record in table 120 that is associated with a particular record in table 110 is conditioned on satisfying the membership criteria set forth in the membership criteria field of the corresponding record in table 110. Optionally, as suggested above, a similar membership criteria field can be included in table 150. Just as the membership criteria field of table 110 can specify "I am willing for you to be a member of my group provided that ....," so can the membership criteria field of table 110 specify "I am willing to be become a member in group X provided ...," or "I am willing to remain a member in group X provided...." Stated differently, each record in affiliations table 120 is owned by the corresponding affinity group and the member identified in each record, in an AND-function way. Both have to agree to the existence of a record that associates one to the other, and both have to agree about the ability of any other party to even have read-access to that record. On the other hand, either one of them can cause a deletion of the record. This way, an individual can dynamically control the access by others of his affiliation status with affinity groups and, similarly, affinity groups can control the ability of others to identify members who are affiliated with the affinity group.

Illustratively, Columbia University may allow certain providers of goods and services (e.g. certain travel agencies) to have access to the records in table 120. The thus privileged travel agency, based on a search of table 120, can obtain the member ID of affiliated members, and then access the members table 150. Those members who allow read-access of their e-mail address can then be reached by e-mail, and the travel agency can send advertisements regarding, for example, travel specials. Those members that do not wish to receive such advertisements can turn off read-access permission to the corresponding record in table 120, or turn off read-access permissions to the e-mail field within table 150. This is a form of "push" advertisement, in the sense that the recipient of the advertisements did very little to ask for them. Primarily, the member-recipient just refrained from blocking the advertisement.

As can be observed, the level of flexibility with the above-disclosed database arrangement is almost limitless in system 100.

Table 140 is a table of providers. It maintains a record of all providers of goods and/or services (benefits) that are associated with system 100. As with table 150, table 140 includes an internal ID field, a provider ID field, numerous data fields (such as a category field), a password field, an access criteria field, and a membership criteria field.

Lastly, table 130 specifies the various benefits that may be obtained with the aid of the FIG. 1 system. In addition to an internal ID field, table 130 includes a provider ID field, a group name field, and other fields such as the benefit that is associated with the record, a discount field (the price discount that is offered with the associated benefit), etc. Each record in table 130 is owned by the provider and the affinity group in an AND-function manner as described above in connection with table 120.

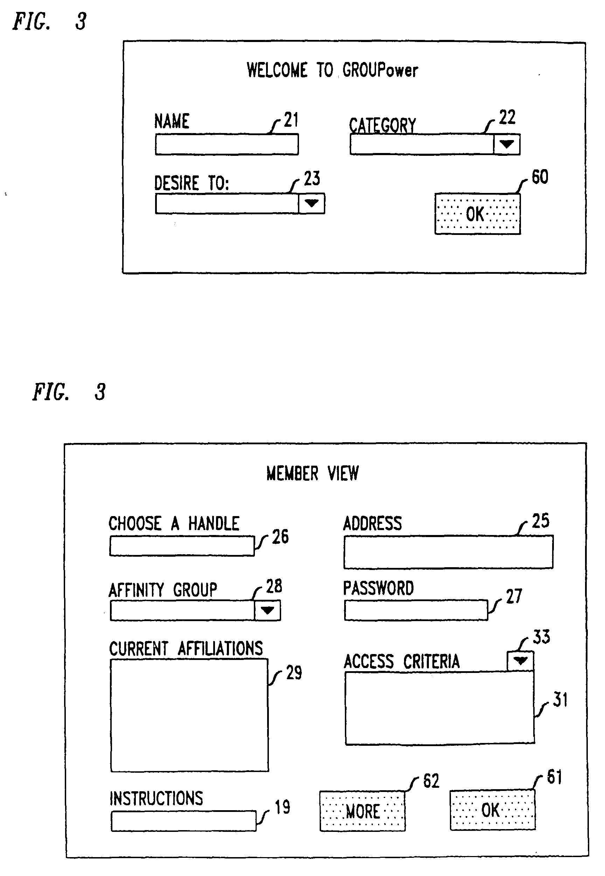

Operationally, an entity (henceforth, caller) can connect to system 100 via network 200, and proceed from there under the guidance of processor 20. The first thing that processor 20 needs to know is who the caller is and what the caller wishes to do. Accordingly, the first interaction with the caller is a dialog. For purposes of the following discussing, it is assumed that the caller connects computer 50 to system 100 through modem bank 16 (though a skilled artisan would be able to easily port the principles disclosed herein to a web-based interaction, or a voice response system). Thus, in such a connection mode, the first interaction is a dialog box such as shown in FIG. 3. It includes a text field 21 that allows the caller to identify himself with a name and/or ID, a category combo box 22, and an action request combo box 23. Combo box 22, when selected, offers the caller to choose from a list that comprises:
- Member
- Affinity group
- Provider
- Prospective member
- Prospective affinity group
- Prospective provider
Combo box 23 is disabled (and, hence, cannot be selected) until after combo box 22 has been selected and a choice has been made. When selected, combo box 22 presents choices that are tailored to the category of the caller.

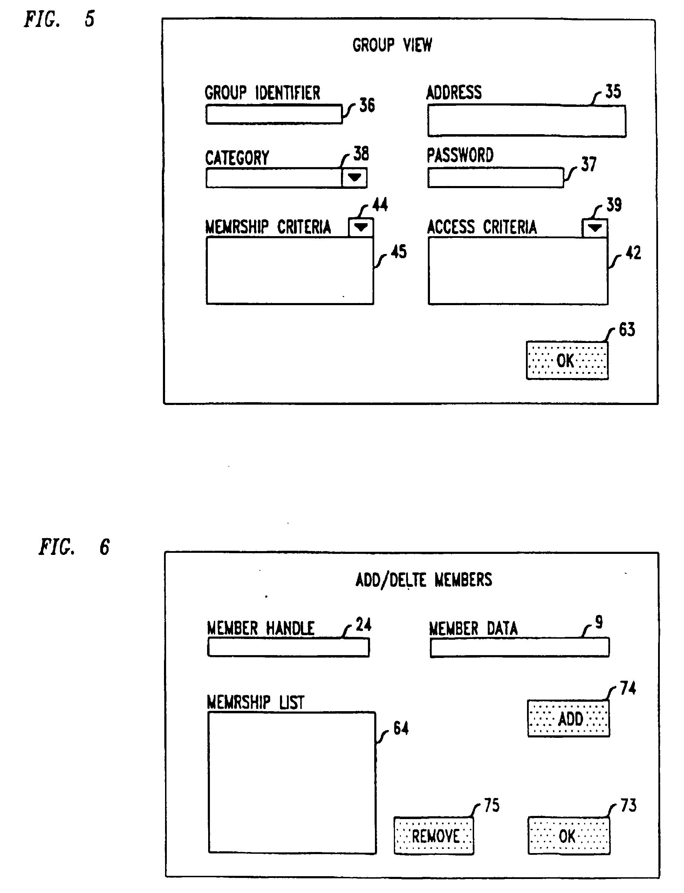

When the caller is a prospective member, he identifies himself as such in the FIG. 3 dialog box, selects, for example, the option "register for an affiliation" that is presented by combo box 23, and presses the "OK" command button 60. In response, processor 20 presents a dialog box not unlike the one illustrated in FIG. 4. In FIG. 4, for example, there are text boxes 25, 26, and 27 for entering the prospective member's address, a handle (for populating the member ID field), and a password, respectively. In addition, the FIG. 4 dialog box includes a text box 31 with a "builder" section 33. Builder section 33 assists the prospective member in constructing a proper access criteria string, or program. Builder section 33 operates in a manner not unlike the Microsoft Visual Basic program assists developers in creating SQL statements, and the like. Lastly, the FIG. 4 dialog box includes a combo box 28 for affinity groups, and a current affiliations list box 29. The data for combo box 28 is obtained by selecting group names from group table 110. Selecting combo box 28 allows the prospective member to seek membership, or affiliation, in the chosen group. Clicking on the "OK" command button 6I, or on the "More" command button 62, makes the actual request.

When either of these command buttons (61 or 62) is clicked, processor 20 searches table 110, reads the access criteria field, determines from the access criteria field that reading the membership criteria field is permissible, reads that field, and determines whether the prospective member meets the admission requirements. If so, an entry is made in table 150 (since the prospective member is qualified for affiliation with at least one affinity group), and a corresponding entry is made in table 120. Concurrently, the information that the prospective member has been declared to have an affiliation with the group identified in combo box 28 is placed in list box 29. When the "OK" button is clicked, the "register for an affiliation" process terminates. When the "More" button is clicked, the information in combo box 28 is erased, making the process ready for the member to seek an affiliation with another affinity group.

The above describes how members table 150 and affiliations table 120 are populated, one record at a time. It is also possible for a group to populate tables 150 and 120 with a set of members. One way to accomplish this is "off line," through interaction with the administrator of system 100. In such a case, the group provides all of the necessary information for each member, with a number of the fields (e.g., the handle and password) being provided with default values. The administrator installs this information in the tables.

When a party who is a member by virtue of this process calls into system 100 for the first time, processor 20 presents the caller with the FIG. 3 dialog box. When the caller identifies himself as a member, processor 20 detects the fact that this is a first-time call, and presents the member with a dialog box not unlike the one described above in connection with FIG. 4, and requests the caller to supply the missing information, such as a handle, a password, access and membership criteria. As an aside, when reference is made herein to actions by a "group," what is meant is actions by an entity that represents the group. More specifically, what is meant is actions by an entity that is in possession of the group's password.

When the caller who responds to the FIG. 3 dialog box identifies himself as a member, and is not a first-time user in the sense described above, a different set of choices is presented by combo box 23 to the caller. This set, which is the set of actions that a member may request of the FIG. 1 system, can be as small or large as the designer of the FIG. 1 system desires.

One of the choices is likely to be "modify personal information." When the caller selects this option, and also supplied the proper password, the FIG. 4 dialog box is again presented. It is important to note that, in the context of the above description, the FIG. 4 dialog box is presented to the member caller whether the caller wishes to adjust his affiliations with affinity groups, as well as when the member wishes to modify other information, such as his personal information, the access criteria, or the membership criteria. FIG. 4 does not show all of the fields for sake of clarity, but it should be understood that the FIG. 4 dialog box has numerous additional fields to display information that can be modified by the member. Also, it may be useful to note that some embodiments might find it advantageous to have two or more dialog boxes that may follow the FIG. 3 dialog box. For example, combo box 23 might presents to members the choices "modify personal information," "modify access criteria," and "modify affiliations." In such a case, three somewhat different dialog boxes would be employed.

Still further, when a caller who is a member is presented with the FIG. 4 dialog box and the member is affiliated with more than one affinity group, list box 29 is populated with a list of those affiliations. When an entry in the list box is selected, an additional command button is made visible, for example titled "Delete," which allows the user to remove the member's affiliation with the selected affinity group. In the FIG. 2 database, a record is deleted by that action.

Populating group table 110 is similar to populating member table 150. When, in response to input from the FIG. 3 dialog, it is determined that the caller is a prospective group, a dialog like the one shown in FIG. 5 is presented. The FIG. 5 dialog box includes text boxes 35 through 37 for populating the address, group identifier, and password. Additionally, the dialog box includes combo box 38 for a category designation (e.g. educational institution, charity, etc.), access criteria text box 42 with an associated "builder" 39, and membership criteria text box 45 with an associated "builder" 44. An "OK" command button 63 completes the elements depicted in the FIG. 5 dialog box.

On the face of its, there does not seem to be any impediment for anyone to create an affinity group record. In practice, however, processor 20 will install a record in affiliations table 110 only if the administrator of system 100 agrees. To that end, processor 20 may have requirements that the group must satisfy. The satisfying of those requirement may be done "off line" or, alternatively, additional fields may be presented for the prospective group to populate, in which case affinity groups can be created very easily. Since the FIG. 1 arrangement is likely to be constructed to benefit not only the members, the affiliation groups, and the providers, but also the administrator of system 100, a group wishing to register (i.e., wishing to have a record in table 110) may have to agree to pay the administrator some money; either in a lump sum fashion, or on a "per use" fashion. In either case, the administrator may wish to have information about the group's financial responsibility, such as a bank name, address, and account information. The caller would need to supply that information before processor 22 would proceed to install a record in affinity groups table 110.

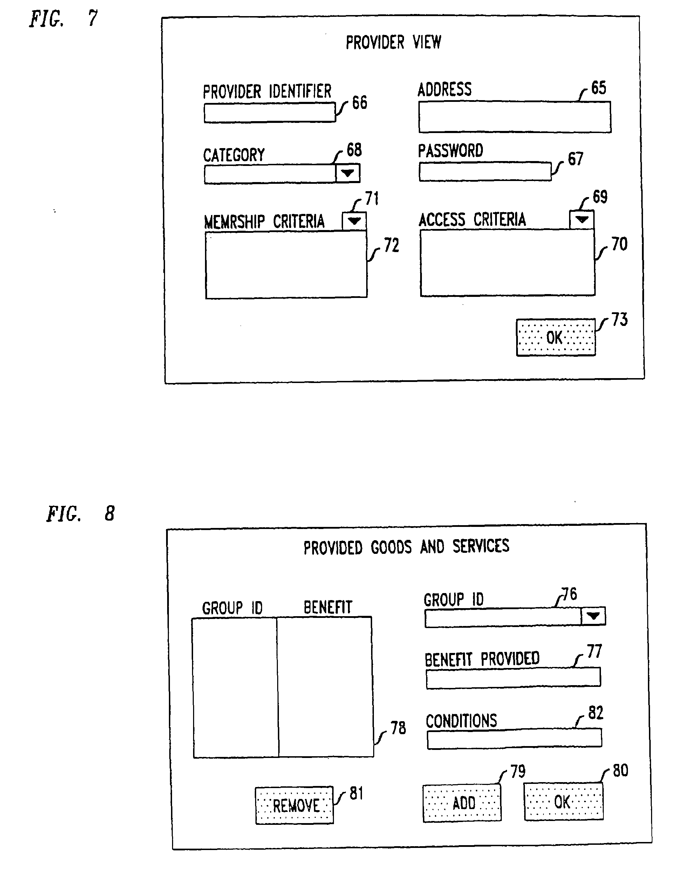

In some embodiments, it may be decided that a group should be able to specify members, perhaps one at a time (in contrast to an entire collection of members). In the context of the FIG. 2 relational database, another way of saying the above is that the group should be able to add records to member table 150 while entering records in affiliation table 120. In such embodiments, when the caller identifies himself as the affinity group, combo box 23 in the FIG. 3 dialog provides an "add members" option. Selecting that option causes processor 20 to present a dialog box akin to the one described in FIG. 6.

The FIG. 6 dialog box presents text box 24 for the new member's handle, and various member information text boxes, such as the member data text box 9 that is shown in FIG. 6. Command button 74, labeled "ADD," allows the group to add members to table 150 and to table 120. When the "ADD" command button is clicked, in addition to populating tables 150 and 120 with a record, the added member is shown in list box 64, and text boxes 24 and 9 are cleared in preparation for entering information about another new member. Clicking the "OK" command button 73 terminates the process. The FIG. 6 dialog box is also used when a group wishes to remove a record from affiliations table 120, and thereby discard a member. This is accomplished by selecting the member to be discarded in list box 64 and clicking command button 75, which in FIG. 6 is labeled "Delete."

When the caller identifies himself as a group, a different set of choices is presented by combo box 23 to the caller than when the caller identifies himself as a prospective group. This set, which is the set of actions that a group may request of system 100 can be as small or large as the designer of the FIG. 1 system desires. One of the choices is likely to be "modify personal information." When the caller selects this option, the FIG. 5 dialog box is again presented.

When the caller identifies himself as a prospective provider, a dialog box like the one shown in FIG. 7 is presented. The FIG. 7 dialog box includes text fields 65, 66, and 67 for the provider's address, ID, and password. Additionally, the FIG. 7 dialog box includes combo box 68 for a category designation (e.g. medical practitioner, electronics distributor, retail merchant, etc.) an access criteria field 70 with an associated "builder" 69, a membership criteria field 72 with an associated "builder" 71, and "OK" command button 73.

As in connection with the other dialog boxes, the access criteria builder section 69 is provided to help the provider create access criteria programs that are tailored to prevent/allow access by a caller to the provider's records in table 140. The membership criteria builder box 71 is provided to help the provider create membership criteria programs that are tailored to prevent/allow access by a caller to table 130 records that are associated with the provider. Clicking on the "OK" command button 73 populates tables 130 and 140.

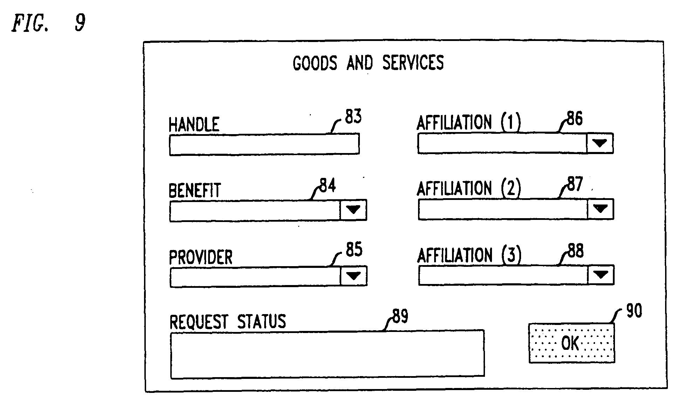

Following the initial installation of a record in table 140, a second dialog box is presented to the provider (who is no longer a "prospective" provider), such as the one shown in FIG. 8. This dialog box allows for the provider to add records to table 130 or to delete records from table 130. To aid in this operation, the FIG. 8 dialog box includes a list box 78 so that the provider can view all of the benefits that the provider offers to various groups. The dialog box also includes a combo box 76 that allows the provider to specify a group, and a text box 77 that allows the provider to specify a benefit for the group identified in combo box. Additionally, the FIG. 8 dialog box includes a text box field 82 that allows the provider to specify conditions for the provision of the specified benefit to members of the specified group. Typically, the conditions will include price a discount.

When the caller wants to add a benefit to a group, he clicks on the group ID combo box, selects one of the groups from the offered list of affinity groups, populates the benefit text box 77 and the conditions text box 82, and clicks the "Add" button 79. When the provider no longer wants to provide a benefit to a group, the provider highlights the group ID and benefit entry that is displayed within the list box 78, and clicks "Remove" button 81. This action removes the benefit and group from list box 78, and the corresponding record in table 130. To aid in editing table 130 records, when the provider highlights a benefit and group entry within the list box 78, the information in elements 76, 77, and 82 is populated with the information from table 130 that corresponds to the highlighted benefit and group. This allows the provider to easily modify the information in table 130 by changing the data and clicking the "OK" command button 80. Clicking the "OK" button also terminates the process.

When a caller identifies himself in the dialog box of FIG. 3 as a provider (rather than as a prospective member), combo box 23 presents the caller with a different set of choices than when the caller identifies himself as a prospective provider. This set, which is the set of actions that a provider may request of system 100 can be as small or large as the designer of the FIG. 1 system desires. Most probably, one of the choices will be to add, remove, or edit entries of table 130. Selecting that option would lead the provider to the FIG. 8 dialog box.

As indicated above, when the caller declared himself (in combo box 22) to be a member, rather than a *prospective* member, combo box 23 presents a different set of choices. In addition to an option to modify the member's record, that set of choices may includes, for example,
- Modify member affiliation(s)
- Obtain goods and services
- Modify benefits sought
Based on the choice made by the caller, an appropriate dialog box is presented to the caller. To modify member affiliations, the member is presented with a dialog box that is similar to the one presented in FIG. 4, allowing the member to effectively submit an application for membership in an affinity group, and/or to cause a membership to an affinity group to be terminated (with a "delete" command button that is not shown in FIG. 4, which is associated with list box 29).

To obtain a benefit, such as to purchase some goods and services, a dialog box such as the one depicted in FIG. 9 is presented to the caller. This dialog box includes a text box 83 for the caller to specify a member's handle (in case, for example, the caller is a merchant with the member being in communication with the merchant), a combo box 84 that allows the caller to specify a benefit, a combo box 85 that allows the caller to specify a provider, and combo boxes 86, 87 and 88 that allow the caller to assert one or more affiliations. Any combination of these classes of information (in addition to the required "handle" information) can be provided by the caller. In response to a submission of the information (with a click on an "OK" command button), processor 20 searches tables 150, 110, 120, and 130, as appropriate, to find responsive information. It should be noted that each search of a database table incorporates a reading of the access criteria field to determine which table information the processor may look at. It is noted that the caller does not need to identify himself because system 100 already knows who the caller is (via the FIG. 3 dialog box). Lastly, text box 89 presents feedback to the caller of the conditions (e.g., discount) under which the sought benefit may be provided. The "OK" command button 90 is provided to terminate the process. Those conditions might specify the discount that the provider is offering for a purchase, based on the fact that the supplicant of the goods and/or services to be purchased (owner of the handle) is a member in good standing with one or more of the asserted affinity groups. When affiliation with more than one affinity group is asserted, system 100 may be arranged to provide a response with respect to each of the asserted groups, to provide a response only with respect to those groups that respond positively to the assertion of affiliation, to provide only the best response (e.g., the highest discount), etc. It may be noted that the response need not be the same for all members of an affinity group. The differences may lie in some sub-category of the group to which the supplicant belongs, or in the individual past history (e.g. purchases) of the supplicant.

The "modify benefit sought" option allows a member caller to submit a request for a benefit that need not be satisfied immediately, but can (or needs to) be satisfied at some future date. This option also allows the member to modify the request before it is satisfied. A dialog box for this option can be quite similar to the dialog box of FIG. 9, with the "futures" aspect of the request being incorporated in combo box 84. Alternatively, a somewhat different dialog box can be provided that allows the caller to provide specific information such as when the caller wants to benefit to be granted, what price the caller is willing to pay, etc.

To implement this functionality, system 100 may, advantageously, include a "cron" (in the UNIX sense) that regularly looks at requests that are slated for future satisfying, and determines whether the requests can be satisfied.

Skilled artisans would recognize that the access criteria fields and the membership criteria field can contain statements that are logically quite complex and that such complexity can be reduced with additional tables that are relationally tied to the associated tables. For example, there may be a table that is relationally tied to table 150 that would contain the access criteria information (effectively) for table 150. This can be achieved by realizing that a complex set of any access criteria of interest can be decomposed into an OR function of a set of individual access criteria (AC1, AC2, AC3,...), where each AC (e.g., AC1) is an AND function of sub-criteria. Some sub-criteria can, of course, be the Boolean negation of another sub-criteria. For example, a sub-criterion can be NOT(age under 21). Hence, any access criteria function can be embodied in a multi-column table where each AC is a separate entry, and the multiple fields in each entry correspond to the sub-criteria.

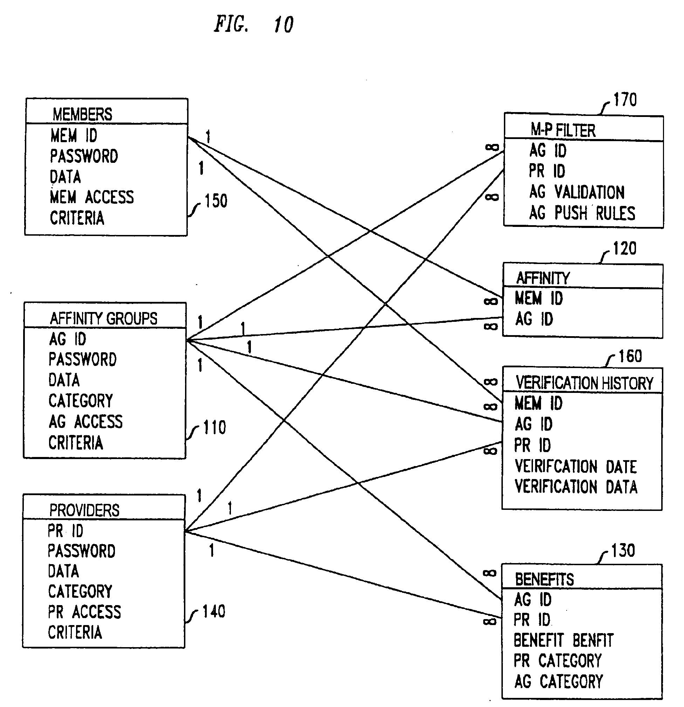

FIG. 10 presents a different relational database structure. It includes the five tables described in connection with the FIG. 2 embodiment, and includes two additional tables: a verification history table 160, and a filter table 170. Verification history table 160 is merely a repository of the events that occur in the FIG. 1 system. Filter table 170 coalesces the access criteria and the membership criteria of the other tables. It may be noted that the information of history table 160, if desired, could also be included in various fields in tables 150, 110, and 140 of the FIG. 2 database arrangement. The history information, which possesses useful statistical information, is made available in such embodiments to the constituents of the FIG. 1 system (members, groups, providers) as the administrator of system 100 chooses. In embodiments where the history information is not maintained, interactions between providers and members that take advantage of an affiliation with an affinity group are reported to the affinity groups either through "off line" reports, or immediately, through communication module 40, or through communication module 10.

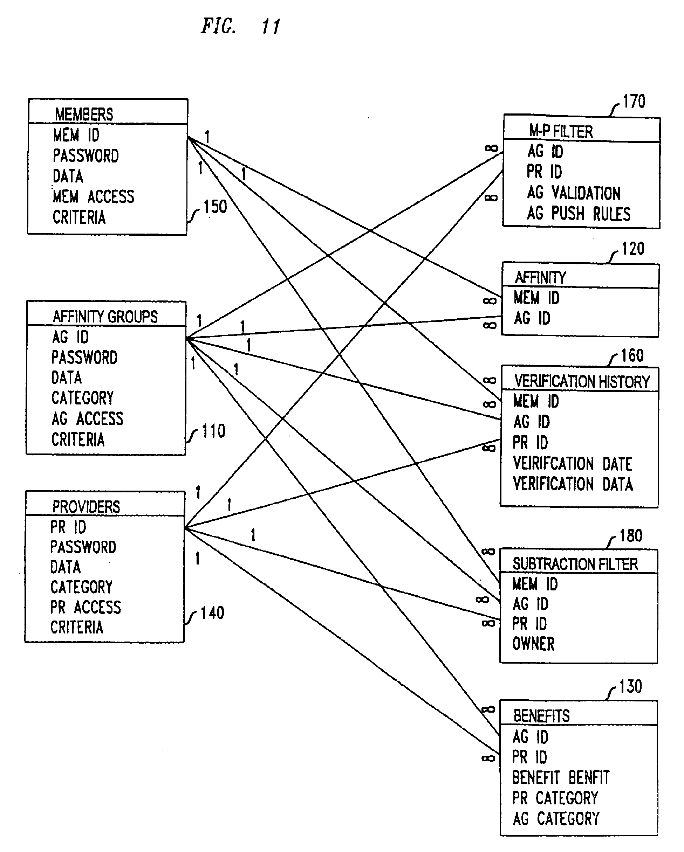

FIG. 11 presents still another database arrangement that includes a subtraction filter table 180. It includes at least the fields corresponding to the member ID, the affinity group ID, and the provider ID, and it allows the explicit exclusion of member, groups, or providers from specified interactions.

Skilled artisans would recognize that the databases described above do not have to have each of the tables in one cohesive table. For example, it is quite feasible to divide the database so that each affinity group identifies its own members, creating thereby an arrangement where there is a plurality of information sets, each containing a member table and a pointer to an affinity table. This is logically the same as the arrangements described above, although the physical implementation is different.

The FIG. 1 system depicts a communication module 40, but the description above makes no reference to this module. This is because the above description assumes that all of the tables are maintained within system 100, and/or all of the information of those tables is maintained within system 100. In fact, the above paragraph already exposed the fact that such a situation is not a requirement of the invention disclosed herein. In addition to the fact that a plurality of tables can be used in most circumstances, there is no reason some of those tables cannot be physically situated in systems remote to system 100; most likely, on systems that are under control of other parties. For example, some, or all, of the affinity groups may choose to keep their table of affiliated members under strict control, in which case they may choose to keep the relevant affiliations table on their system. To accommodate such needs, system 100 includes communication module 40, which is engaged whenever information needed that requires access to a remote database, such as when it is desired to determine whether a caller is affiliated with an affinity group that maintains its own affiliations table. It may be noted that system 100 allows an affinity group to keep some of its members on affiliations table 120 and also maintain some of its members in a remote table that is found on its own system. Processor 20 needs to only be informed that, when searching for an affiliation, if one is not found by searching table 120, a query needs to be launched and sent out to the affinity group's system. To summarize, it is possible to maintain some of the tables remotely, and it is also possible to split tables, both horizontally (some of the records are local, while others are remote) and vertically (some of the fields are local, while others are remote).

For example, when table 150 (in whole or in part) is located remotes, when information about affiliation of members is needed (e.g. to verify affiliations), module 40 accesses affinity groups table 110 (or even, perhaps, a truncated version thereof), associates a group's name with information for reaching a remote system where the needed data relative to the group's affiliated members resides, contacts the remote system of a queried affinity group, provides the name and whatever other information is required (e.g., the handle of the member), and receives a response that either confirms, or denies, that the name corresponds to a bona fide member.

It should be realized that system 100 may have many different dialog boxes that may need to be constructed for a particular embodiment, and that the set discussed above is merely illustrative. Similarly, the set of fields presented in a dialog box (text boxes, combo boxes, etc.) is also merely illustrative. Indeed, not all of the presented boxes need to seek information. For example the FIG. 3 dialog box can contain a text box that specifies a transaction number. This number represents an ID of the session, and this ID can be recorded by the user, for future, or current use. To illustrated current use, the caller might be a merchant who is in separate communication with a remote purchaser who wishes to buy some goods. That purchaser may also be in communication with system 100. The merchant can then tell the purchaser the transaction number of his session, and the purchaser can tell system 100 his handle. This allows the purchaser to withhold the handle information from the merchant and, yet, receive the sought goods.

It should be also realized that the set of dialog boxes that system 100 presents to a caller will, quite likely, be dynamic. For example, different benefits that are offered by the different providers will, most likely, require specialized dialog boxes. Illustratively, when the benefit sought is the purchase of a pair of pants, some dialog box the follows the FIG. 9 dialog box should offer the caller choices of styles, color, size, etc. In accordance with the principles disclose herein, the administrator of system 100 can, in fact, require the provider to provide the necessary dialog box, or dialog boxes. Those can be provided in the form of files, and when the files are installed, so are pointers that lead to those files. In applications that employ this approach, the pointer initial pointer resides in a pointer field of table 130. When the dialog box of the file pointed-to completes its task, it points to the next dialog box, and so on in a chain, until the last dialog box.

It should be realized that dialog boxes are not all that can be provided to callers. In particular, it should be realized that advertisements can be presented to callers, and those advertisement can be focused, or tailored, to the character of the caller, and to the caller's interest. That is, the advertisements can be a function of who the caller is, what the caller's affiliations are, what the caller is doing, what the caller is buying, what the caller has bought in the past, etc. Those advertisements can also be embedded in the dialog boxes, or be presented in separate computer display screens interposed between dialog boxes. The focused advertising is easily realized given the database arrangement of FIG. 2. For example, when the "OK" command button is clicked on one dialog box, a logic module is activated that obtains from table 150 whatever information is desired, and based on the retrieved information and other known information a choice of a next dialog box, a banner, a picture, a movie clip, etc. is made, and executed.

Advertisers are always willing to pay for the privilege of advertising, and the payment can be both in terms of money, and/or discounts on goods and services. Thus, the members, the groups, the administrator of system 100, and the providers can all benefit from advertisements.

The above-mentioned advertisements can be dynamic as well as static. By static we mean that the system 100 administrator is given a set of advertisement, and the administrator, through control of processor 20, insures that the correct advertisements are shown to the correct types of callers in the appropriate circumstances. By dynamic we mean that the providers (or even groups) send in files that contain dialog boxes and advertising files, and as described above, those files are executed in the sequence specified by the sender.

The above disclosed various principles lead to significant commercial benefits to members, providers and affinity groups; and those principles are disclosed by means of illustrative embodiments. However, it should be recognized that various changes and enhancements can be made without departing from the spirit and scope of the invention, which is defined in the claims that follow.

To illustrate, the above discussion is couched in terms of a dial-up modem connection, It is clear, however, that an Internet connection can be used as well. The dialog boxes can be simply embedded in html pages, as can the advertisements. With the availability of Java scripts, the interactions between the caller and system 100 can be almost limitless.

To give another illustration, the above-disclosed cron that reviews specified requests that are slated for a future satisfying can also activate intelligent agents, or other scripts that can operate on behalf of any of the authorized callers to system 100.

To give still another illustration, system 100 can be easily adjusted to accept the entire set of caller interactions from an electronic source, meaning that the dialog boxes can be replaced with, simply, a two-way electronic conversation between system 100 and some electronic proxy of the caller; which we call "a dialog stream". The manner by which this is done is quite conventional. One way, for example, is for the proxy to send a message to system 100 identifying itself as an electronic source. That would switch system 100 from a dialog box mode of interactions to a predesignated communication protocol, or to a communication protocol that is selected by the electronic proxy. This capability is particularly attractive to providers of goods and services, since it offers the providers a mechanism for offering goods and services based on availability. Illustratively, when a block of hotel rooms becomes available, those hotel rooms can be offered on system 100, and when the block of hotel rooms is no longer available, that offer is deleted from system 100.

To give yet another illustration, system 100 can be enhanced with a subsystem for knowing where its members are. This can be as simple as a caller ID module, or as sophisticated as a GPS or other wireless system that can tract some of the system's automatically. In this manner, when a member is found to be away from home, for example, across the Atlantic, system 100 can attempt to enroll the member is a local affinity group.

## Claims

1. A method carried out in a computer, for verifying affiliation with an affinity group, as asserted by a supplicant, comprising the steps of:
receiving from a party seeking to verify an asserted affiliation of said supplicant with said affinity group, an identification of said affinity group;
receiving a specification identifying said supplicant,
accessing an information store,
based on said step of accessing, determining whether said asserted affiliation is valid, and
sending information reflective of said determining carried out pursuant to said step of accessing.

2. The method of **1** wherein said specification identifying said supplicant is provided by said party.

3. The method of claim **1** wherein said specification identifying said supplicant is provided by another party.

4. The method of claim **3** where said another party is said supplicant.

5. The method of claim **1** where said information reflective of said determining includes whether said affiliation is valid, and additional information.

6. The method of claim **5** where said additional information specified details regarding benefits that inure to said supplicant.

7. The method of claim **1** where said information reflective of said step of determining is an advertisement.

8. The method of claim **1** further comprising a step of sending information that requests said party to supply additional information.

9. The method of claim **8** where said additional information specifies a benefit sought by said supplicant.

10. The method of claim **9** where said benefit relates to a purchase of any combination from the set comprising goods and services.

11. The method of claim **10** where said additional information relates to conditions relating to said benefits.

12. The method of claim **11** where said conditions are reflective of said supplicant being affiliated with said affinity group.

13. The method of claim **11** where said conditions represent a discount on purchase of goods and services.

14. The method of claim **1** where said specification of an affinity group specifies more than one affinity group, and said step of determining determines, with respect to each of the asserted groups, whether said supplicant is a member.

15. The method of claim **1** where said specification of an affinity group specifies more than one affinity group, and said step of determining determines whether said supplicant is a member of any of the specified affinity groups.

16. The method of claim **1** further comprising a step of storing information about the fact that said computer carried out other steps of said method with respect to said supplicant and with respect to said asserted affinity group.

17. The method of claim **16** where information stored in said step of storing information is provided to said affinity group

18. A method carried out in a computer, for verifying affiliation, asserted by a supplicant, with an affinity group, comprising the steps of:
connecting to said computer,
specifying an affiliation group;
identifying said supplicant,
causing an access by said computer of an information store, to yield search results,
causing a determination, based on said search results, as to whether said asserted affiliation is bona fide, and
receiving information reflective of said determination carried out pursuant to said step of accessing.

19. The method of claim **18** wherein said information store is a database.

20. The method of claim **18** where said search results provide only whether said supplicant's assertion is true or not true.

21. The method of claim **18** where said search results specify whether said supplicant's assertion is true or not true, and provide additional information.

22. The method of claim **18** where said search results specify details regarding benefits accruing to said supplicant by virtue of said affiliation with said affinity group.

23. The method of claim **22** where said details depend on standing of said supplicant within said affinity group.

24. The method of claim **22** where said details depend on past behavior of said supplicant.

25. The method of claim **18** where said affinity group is under control of a party different from a party that exercises control over said computer.

26. The method of claim **18** where said affinity group is under control of a party that is different from a party that controls another affinity group that may be specified in said query and searched by said computer.

27. The method of claim **18** further comprising the step of informing said affinity group of said query.

28. The method of claim **18** further comprising the steps of
receiving information that a benefit was granted to said supplicant based on said supplicant's verified affiliation with said affinity group, and
informing said affinity group of said grant of benefit.

29. The method of claim **18** wherein said step of accessing accesses an information store that is remote to said system.

30. The method of claim **18** wherein said step of accessing accesses an information store remote to said system at a location particular to each of said affinity groups.

31. The method of claim **18** wherein said step of accessing accesses a different information store for different ones of said affinity groups.

32. The method of claim **31** wherein some of said different information stores are remote to said system.

33. The method of claim **32** where information stores that are remote to said system contain sensitive information.

34. A method carried out in a computer interacting with a party comprising the steps of:
ascertaining who said party is and what said party desires to do;
when said party wishes to verify affiliation of a supplicant with an asserted affinity group, the asserted affinity group being one from a set of affinity groups known to said computer, executing a verification of said asserted affiliation with said affinity group; and
responding to said party with information relating to results of said step of executing a verification.

35. The method of claim **34**, carried out in an interactive dialog box fashion, where said computer sends a dialog box to said party, said party provides informatio and in response thereto said computer sends another dialog box.

36. The method of claim **34** carried out in a dialog stream manner.

37. The method of claim **34** where said step of executing a verification includes accessing a database within said computer that contains a record of members and their affiliations with affinity groups.

38. The method of claim **34** where said step of executing a verification includes accessing a database within said computer and a remote database that is specific to said asserted affinity group.

39. The method of claim **34** where said information relating to results provides confirmatory information as to whether said supplicant is a member of the asserted affinity group and additional information.

40. The method of claim **39** where said additional information is any combination from a set containing advertisements, information about conditions for providing a benefit to said supplicant, and a request for additional information to be provided to said computer.

41. A system comprising:
a communication module for receiving a query from a party,
a front-end processing module that prompts callers connected to said system via said communication module to provide information regarding a supplicant, and, separately, information identifying a specific affinity group from among a plurality of diverse affinity groups,
a search engine that determines whether said supplicant is affiliated with said specified affinity group; and
a communication path for applying to said communication module information related to search results obtained by a search engine, that enables said communication module to respond to said query.

42. The system of claim **41** further comprising means for said search to engage said communication module to query a remote database, in the course of said search engine making a determination whether said supplicant is affiliated with said specified affinity group.

43. The system of claim **41** further comprising a second communication module, coupled to said search engine, for communicating with remote databases.

44. The system of claim **41** further comprising a member location determining module.

45. The system of claim **44** where said location determining module is taken from a set including a Global Positioning System, and a Caller ID system.

46. The system of claim **41** further comprising a control module that selects a protocol for communication with said party.

47. A computer program directly loadable into a working memory of a computer for performing the method of any claims from 1 to 40 when the program is run on the computer.

48. A program product comprising a computer readable medium on which the program of claim 47 is stored.
